# EUROPÄISCHE PATENTSCHRIFT

(11) **EP 3 398 815 B1**
(45) Veröffentlichungstag und Bekanntmachung des Hinweises auf die Patenterteilung: **18.01.2023**
(21) Anmeldenummer: 18163670.5
(22) Anmeldetag: 23.03.2018
(51) Int. Cl.: B60Q 9/00, B60Q 3/208, B60Q 3/78, B60Q 3/80, B60Q 3/14

(54) **VERFAHREN ZUM BETREIBEN EINER BELEUCHTUNG EINES KRAFTFAHRZEUGS SOWIE KRAFTFAHRZEUG ZUR DURCHFÜHRUNG DES VERFAHRENS**
METHOD FOR OPERATING ILLUMINATION OF A MOTOR VEHICLE AND MOTOR VEHICLE FOR CARRYING OUT THE METHOD
PROCÉDÉ DE FONCTIONNEMENT DE L'ÉCLAIRAGE D'UN VÉHICULE AUTOMOBILE AINSI QUE VÉHICULE AUTOMOBILE PERMETTANT LA MISE EN UVRE DUDIT PROCÉDÉ

(30) Priorität: 03.05.2017 DE 102017207436
(43) Veröffentlichungstag der Anmeldung: 07.11.2018
(73) Patentinhaber: VOLKSWAGEN AKTIENGESELLSCHAFT, 38440 Wolfsburg (DE)
(72) Erfinder: Sturmat, Sandra, 38102 Braunschweig (DE)

(56) Entgegenhaltungen:
- DE-A1-102012 009 024
- DE-A1-102013 225 852
- DE-A1-102015 109 382
- DE-A1-102015 210 887
- DE-A1-102015 217 391
- US-A1- 2015 198 319
- US-A1- 2016 185 387

## Beschreibung

Die Erfindung betrifft ein Verfahren zum Betreiben einer Beleuchtung eines Kraftfahrzeugs mit den Merkmalen vom Oberbegriff des Patentanspruchs 1. Die Erfindung betrifft ferner ein Kraftfahrzeug zur Durchführung des Verfahrens gemäß den Merkmalen vom Oberbegriff des Patentanspruchs 4.

Bei dem Kauf heutiger Kraftfahrzeuge spielen für die Kunden Eigenschaften wie zum Beispiel Sportlichkeit, Sparsamkeit, Sicherheit, Umweltverträglichkeit, Preis und Design eine wichtige Rolle. Zum Design gehört auch das entsprechende Lichtdesign eines Kraftfahrzeugs, welches beispielsweise durch die Form und Anordnung eines Tagfahrlichts beeinflusst wird.

Überdies ist es in jüngster Zeit aus dem allgemeinen Stand der Automobiltechnik auch bekannt geworden, zur markenspezifischen Individualisierung eines Kraftfahrzeugs bewegtes Licht als sogenannte Coming-Home-Funktion und/oder Leaving-Home-Funktion einzusetzen.

So kann beispielsweise beim Öffnen eines Kraftfahrzeugs mittels eines Funkschlüssels vor Fahrtantritt (Leaving Home) ein Lauflicht erzeugt werden, welches sich in Längs-, Quer- und/oder Höhenrichtung des Kraftfahrzeugs bewegt. Ein entsprechendes Lauflicht ist bei Verriegeln des Kraftfahrzeugs mittels des Funkschlüssels nach Beendigung der Fahrt und nach dem Verlassen des Kraftfahrzeugs (Coming Home) möglich.

Aus der DE 197 45 993 A1 ist ein Verfahren bekannt geworden, bei dem ein Kraftfahrzeug an seiner Außenhaut der Fahrzeugkarosserie mit Elektrolumineszenz-Leuchtbändern ausgestattet ist. Diese erstrecken sich durchgängig entlang des Fahrzeugstraks von einem frontseitigen Scheinwerfer bis zu einer Heckleuchte. Die Leuchtbänder sind aus einer Vielzahl kleiner, individuell ansteuerbarer Einzelsegmente aufgebaut. Durch entsprechende Ansteuerung kann somit ein Lauflicht erzeugt werden, welches in Abhängigkeit von bestimmten Fahrmanövern durchgeführt wird. Insbesondere wird vorgeschlagen, dass bei einem Einpark- oder Ausparkmanöver des Kraftfahrzeugs das Lauflicht so betrieben wird, dass dessen Laufrichtung der jeweiligen Fahrtrichtung des Fahrzeugs entspricht.

In der DE 43 33 014 C1 sind ein Verfahren mit den Merkmalen vom Oberbegriff des Patentanspruchs 1 und ein Kraftfahrzeug mit den Merkmalen vom Oberbegriff des Patentanspruchs 9 beschrieben. Konkret wird in der genannten Schrift ein Sicherheits-Alarmsystem für Kraftfahrzeuge vorgeschlagen, welches dem Schutz von KraftfahrzeugInsassen vor Überfällen dienen soll. In Reichweite des Fahrers ist ein Auslöser angeordnet, bei dessen Bedienung in einer Notsituation ein optisches Signal erzeugt wird. Das optische Signal kann beispielsweise als den gesamten Fensterbereich umschließendes, langgestrecktes Leuchtband ausgebildet sein.

Der DE 20 2015 006 739 U1 ist eine LED-Werbebeleuchtung zum Nachrüsten für Kraftfahrzeuge zu entnehmen. Die LED-Werbebeleuchtung kann als Lichtband im Heck oder im Seitenbereich an der Scheibe des Kraftfahrzeugs erscheinen.

Die DE 10 2012 009 024 A1 beschreibt ein Verfahren für eine Anzeigevorrichtung eines Fahrzeugs. Konkret werden ein gerader Linienzug in einem Kombiinstrument, ein gerader Linienzug in einer mittleren Anzeigevorrichtung über der Mittelkonsole und eine linienförmige Beleuchtungsvorrichtung in der beifahrerseitigen Instrumententafel erzeugt. Zur Anzeige der Betriebs- bzw. Abfahrbereitschaft nach dem Starten des Fahrzeugs werden nacheinander die Linienzüge in eine oszillierende Bewegung versetzt und die linienförmige Beleuchtungsvorrichtung aktiviert.

Aus der DE 10 2010 018 336 A1 ist ein Beleuchtungssystem mit einer ersten Beleuchtungsvorrichtung, einer zweiten Beleuchtungsvorrichtung, einer dritten Beleuchtungsvorrichtung und einer vierten Beleuchtungsvorrichtung bekannt. Die erste und die zweite Beleuchtungsvorrichtung erstrecken sich in leistenartigen Verkleidungselementen horizontal entlang einem beifahrerseitigen Instrumententafelabschnitt und entlang einer Türinnenseite der Beifahrertür. Die dritte Beleuchtungsvorrichtung ist in Verkleidungselemente eines Lenkrades integriert. Schließlich erstreckt sich die vierte Beleuchtungsvorrichtung wiederum in einem leistenartigen Verkleidungselement entlang einer Türinnenseite der Fahrertür. Eine Steuereinheit kann die Beleuchtungsvorrichtungen mit Signalen ansteuern, die auf umgebungs- oder fahrzeugspezifischen Daten beruhen. Dies führt zu Anzeigefunktionen des Beleuchtungssystems, welche unter anderem optische Anzeigen eines Begrüßung- oder Verabschiedungslichtes oder Hinweise auf einen Sperrstatus des Fahrzeugtürschlosses ermöglichen.

Der DE 10 2011 014 262 A1 ist eine Leuchtvorrichtung für ein Kraftfahrzeug mit einem animierten Lauflicht zu entnehmen. Konkret weist die Leuchtvorrichtung eine Platte auf, die aus transparenten und nicht transparenten Streifen gebildet ist. Auf der Unterseite der Platte ist eine Leuchteinrichtung angeordnet. Diese weist mehrere Leuchtelemente auf, die mittels einer Steuereinrichtung ansteuerbar sind. Die Steuereinrichtung kann die Leuchtelemente so ansteuern, dass diese für Beleuchtungszwecke oder im Rahmen einer Assistenzfunktion, z.B. für eine Warnung des Fahrzeuginsassen leuchten. Die Platte kann sich über einen größeren Verkleidungsabschnitt einer Kraftfahrzeugtür oder auch als Leuchtleiste entlang des gesamten Dachhimmels erstrecken. Durch die Steuereinrichtung sind die Intensität und die Farbe des Lichts jedes einzelnen Leuchtelementes individuell steuerbar. Die Leuchtelemente werden insbesondere so angesteuert, dass sich eine in einer Richtung fortbewegende, gaußartige Intensitätsverteilung und damit eine Art Lauflicht erzeugt wird. Dies kann sich in Fahrtrichtung oder auch entgegen der Fahrtrichtung bewegen.

Schließlich wird in der DE 10 2015 109 382 A1 noch eine Beleuchtungsvorrichtung vorgeschlagen, die aus einer ebenen, in den Umfangsrandbereich einer Glasscheibe integrierten Beleuchtungskomponente besteht. Die Beleuchtungskomponente kann bspw. eine oder mehrere Leuchtdioden aufweisen und als Fahrtrichtungsanzeiger oder auch als animierte, sich von der Mitte nach außen ausbreitende Bremsanzeige konfiguriert sein.

US 2015/198319 A1 offenbart ein Verfahren zum Betreiben einer Beleuchtung eines Kraftfahrzeugs, bei dem ein Lichterscheinungsbild erzeugt wird, welches sich zumindest über einen Großteil einer Breite des Kraftfahrzeuges erstreckt und das zur Anzeige einer Fahrbereitschaft des Kraftfahrzeuges verändert wird. Dieses Lichterscheinungsbild wird in einem Armaturenbrett des Kraftfahrzeuges erzeugt.

Ausgehend von dem genannten Stand der Technik ist es Aufgabe der vorliegenden Erfindung, ein Verfahren zum Betreiben einer Beleuchtung eines Kraftfahrzeugs bereitzustellen, welches zu einer markenspezifischen Individualisierung eines Kraftfahrzeugs beiträgt. Diese Aufgabe wird mit den Merkmalen von Patentanspruch 1 gelöst.

Es ist ferner Aufgabe der Erfindung, ein geeignetes Kraftfahrzeug vorzuschlagen, welches das erfindungsgemäße Verfahren durchführen kann. Diese Aufgabe wird mit den Merkmalen von Patentanspruch 4 gelöst.

Vorteilhafte Weiterbildungen beziehungsweise Ausbildungen der Erfindung sind den jeweils abhängigen Ansprüchen zu entnehmen.

Die Erfindung geht zunächst aus von einem Verfahren zum Betreiben einer Beleuchtung eines Kraftfahrzeugs, wobei der Betrieb derart erfolgt, dass ein Lichterscheinungsbild erzeugt wird, welches sich über zumindest einen Großteil einer Breite des Kraftfahrzeugs erstreckt.

Das Lichterscheinungsbild wird bei einem Einschalten des Kraftfahrzeugs zumindest für einen Fahrzeugführer sichtbar und wird anschließend zur Anzeige einer Fahrbereitschaft des Kraftfahrzeugs verändert. Die Veränderung des Lichterscheinungsbildes erfolgt aus Sicht des Fahrzeugführers vorzugsweise kontinuierlich oder stetig, also nicht ruck- oder schlagartig.

Ein Fahrzeugführer wird dadurch deutlich darauf hingewiesen, dass das Kraftfahrzeug startklar ist. Insbesondere wird durch die genannte Reihenfolge (zunächst Erscheinen des Lichterscheinungsbildes beim Einschalten und anschließend Verändern des Lichterscheinungsbildes) eine sehr markante und einprägsame Signalisierung der Fahrbereitschaft erzielt.

Unter *Einschalten des Kraftfahrzeugs* soll im Sinne der Erfindung eine solche Handlung des Fahrers verstanden werden, die die Grundvoraussetzung dafür bildet, dass sich das Kraftfahrzeug von selbst in einen fahr- bzw. startbereiten Zustand versetzt bzw. überprüft, ob dies möglich ist.

In der Regel besteht diese Handlung sowohl bei konventionellen Kraftfahrzeugen mit Verbrennungsmotor als auch bei Fahrzeugen mit Elektroantrieb in der Einschaltung der Zündung. Dabei wird die sogenannte "Klemme 15" auf den Zustand "Ein" geschaltet. Dies kann beispielsweise durch das übliche Einstecken eines Zündschlüssels in das Zündschloss und Verbringen des Zündschlüssels in die Zündstellung geschehen. Anschließend wird durch eine interne Steuerung des Kraftfahrzeugs alles veranlasst bzw. überprüft, damit das Kraftfahrzeug gestartet und losgefahren werden kann. Beispielsweise ist denkbar, dass zunächst überprüft wird, ob eine Kraftstoffpumpe funktionsfähig und bereit ist oder ob bei einem Elektrofahrzeug eine Traktionsbatterie ausreichend geladen ist. Üblicherweise erscheinen nach systemseitiger Feststellung der Fahrbereitschaft entsprechende optische Meldungen auf dem Kombiinstrument hinter dem Lenkrad des Kraftfahrzeugs.

Das Verfahren wird so umgesetzt, dass die Veränderung des Lichterscheinungsbildes ebenfalls über zumindest einen Großteil der Breite des Kraftfahrzeugs durchgeführt wird.

Dies führt zu einer deutlichen Verbesserung der Wahrnehmbarkeit durch den Fahrzeugführer.

Einen besonders hohen Wiedererkennungswert kann dem Verfahren erfindungsgemäß dadurch verliehen werden, wenn die Veränderung des Lichterscheinungsbildes von einer Längsmittenebene des Kraftfahrzeugs ausgeht und sich in der Breite des Kraftahrzeugs gesehen in zwei entgegengesetzten Richtungen fortsetzt. Durch diese Art der Visualisierung assoziiert der Fahrzeugführer die Veränderung des Lichterscheinungsbildes mit ihm bereits bekannten Erscheinungsbildern, die ihm intuitiv verständlich sind und denen er eine hohe Aufmerksamkeit schenkt (horizontale Sperren/Schranken = "Stop, es geht nicht vorwärts"; horizontales Öffnen = "es kann losgehen").

Gemäß einer weiteren Verwirklichung des Erfindungsgedankens wird eine Vielzahl von Leuchtbereichen sequentiell nacheinander derart verändert, dass in Bezug auf das Kraftfahrzeug das sich kontinuierlich verändernde Lichterscheinungsbild erzeugt wird. Dies lässt sich technisch gut realisieren.

Die Leuchtbereiche können dabei beispielsweise unmittelbar durch eine Vielzahl von Leuchtmitteln, wie beispielsweise Leuchtdioden (LEDs) gebildet werden. Es ist aber auch denkbar, dass die Leuchtbereiche nur indirekt gebildet werden, beispielsweise durch Optiken, welche entsprechenden Leuchtmitteln nachgeschaltet sind. Auch ist vorstellbar, dass die Leuchtbereiche durch Lichtauskoppelstrukturen in lichtleitenden Elementen, durch Leuchtfolien oder dergleichen gebildet werden, wobei die Aufzählung nicht abschließend sein soll.

Gemäß der Erfindung wird die sequentielle Veränderung der Leuchtbereiche durch eine Reduzierung der Lichtintensität der Leuchtbereiche oder durch einen Wechsel von einer bestimmen Farbe in eine andere bestimmte Farbe der Leuchtbereiche bewirkt wird. So ist beispielsweise denkbar, dass sich das Lichterscheinungsbild kontinuierlich von der Farbe Rot (signalisiert "Stop") hin zu der Farbe Grün (signalisiert "Freie Fahrt") ändert. Auch ist es zum Beispiel vorstellbar, dass das Lichterscheinungsbild von einem Licht mit hoher Lichtintensität in Licht mit niedriger Lichtintensität wechselt.

Ein besonders ausgefallener optischer Effekt lässt sich dadurch erzielen, wenn wenigstens Leuchtbereiche innerhalb einer Fläche der Windschutzscheibe sequentiell verändert werden. In diesem Fall wirkt das Lichterscheinungsbild für den Fahrzeugführer so, als ob sich ein Vorhang vor ihm öffnet und ihn quasi zur Losfahren einlädt.

Ein Beitrag zu einer äußerst guten Wahrnehmbarkeit des sich verändernden Lichterscheinungsbildes kann dadurch geleistet werden, dass die sequentielle Veränderung der Leuchtbereiche durch ein Ausschalten der Leuchtbereiche bewirkt wird.

Besonders gut ist das Lichterscheinungsbild für einen Fahrzeugführer sichtbar, wenn wenigstens entlang der Fensterlinie einer Windschutzscheibe vorhandene Leuchtbereiche sequentiell verändert werden. In einem Beispiel, das nicht Teil der Erfindung ist, kann das Lichterscheinungsbild unterhalb der Windschutzscheibe erscheinen. Es ist auch denkbar, das Lichterscheinungsbild oberhalb und unterhalb der Windschutzscheibe erscheinen zu lassen.

Wie anfangs erwähnt, soll mit der Erfindung auch ein Kraftfahrzeug zur Durchführung des Verfahrens unter Schutz gestellt werden.

Ein dazu geeignetes Kraftfahrzeug ist mit einer Vielzahl von Leuchtbereichen entlang zumindest eines Großteils einer Breite des Kraftfahrzeugs ausgestattet. Durch die Leuchtbereiche ist in Bezug auf das Kraftfahrzeug ein sich zumindest über einen Großteil der Breite des Kraftfahrzeugs erstreckendes und für einen Fahrzeugführer sichtbares Lichterscheinungsbild erzeugbar oder wird durch diese erzeugt.

Das Kraftfahrzeug ist mit wenigstens einer Steuereinrichtung zur Ansteuerung von Leuchtmitteln zur Veränderung der Leuchtbereiche ausgestattet. Bei einem Einschalten des Kraftfahrzeugs sind die Leuchtmittel derart ansteuerbar oder werden derart angesteuert, dass zunächst das Lichterscheinungsbild erscheint. Anschließend ist eine Fahrbereitschaft des Kraftfahrzeugs dadurch anzeigbar oder wird dadurch angezeigt, dass die Leuchtmittel durch die Steuereinrichtung derart ansteuerbar sind oder angesteuert werden, dass sich das Lichterscheinungsbild in Bezug auf das Kraftfahrzeug ändert. Die Änderung des Lichterscheinungsbildes erfolgt vorzugsweise in einer für einen Fahrzeugführer stetig oder kontinuierlich anmutenden Weise, zum Beispiel nach Art eines Lauflichtes.

Zum Zwecke der Erringung einer hohen Aufmerksamkeit ist die Veränderung des Lichterscheinungsbildes ebenfalls über zumindest einen Großteil der Breite des Kraftfahrzeugs durchführbar oder wird so durchgeführt.

Damit die Veränderung des Lichterscheinungsbildes für den Fahrzeugführer besonders gut erkennbar ist, ist die Ansteuerung der Leuchtmittel erfindungsgemäß derart durchführbar oder wird derart durchgeführt, dass die Leuchtmittel sequentiell ausgeschaltet werden und die Veränderung des Lichterscheinungsbildes von einer Längsmittenebene des Kraftfahrzeugs ausgeht und sich in der Breite des Kraftfahrzeugs gesehen in zwei entgegengesetzten Richtungen fortsetzt.

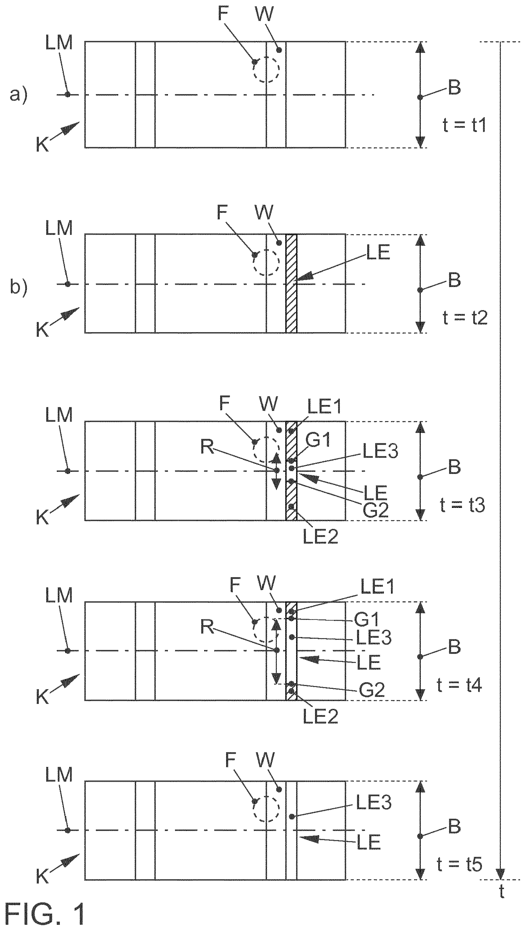

Bevorzugte Ausführungsbeispiele der Erfindung sind in den Figuren 1, 2 und 4 dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Es zeigen, jeweils schematisch
- Fig. 1: eine Darstellung eines Kraftfahrzeugs, welches nach dem erfindungsgemäßen Verfahren betrieben wird,
- Fig. 2: die Darstellung eines Kraftfahrzeugs zur Durchführung des erfindungsgemäßen Verfahrens,
- Figuren 3: die Darstellung eines Kraftfahrzeugs mit einem sich verändernden Lichterscheinungsbild unterhalb seiner Windschutzscheibe , wobei diese Darstellung nicht erfindungsgemäß ist, und
- Figuren 4: die Darstellung eines Kraftfahrzeugs mit einem sich verändernden Lichterscheinungsbild in den Flächen der Windschutzscheibe.

Zunächst wird auf die Fig. 1 Bezug genommen. Dort ist ein Kraftfahrzeug K zu fünf Zeitpunkten einer Zeit t (t1 bis t5) dargestellt. Zum Zeitpunkt t = t1 ist bereits ein Fahrzeugführer F in das Kraftfahrzeug K eingestiegen. Das Kraftfahrzeug K weist eine Breite B auf. Mit LM ist eine Längsmittenebene des Kraftfahrzeugs K beziffert.

Zum Zeitpunkt t=t2 schaltet der Fahrzeugführer F das Kraftfahrzeug K durch Aktivieren der Zündung ein, woraufhin ein Lichterscheinungsbild LE mit einer hohen Leuchtintensität erscheint. Das Lichterscheinungsbild LE erstreckt sich unmittelbar unterhalb einer Windschutzscheibe W über die gesamte Breite B des Kraftfahrzeugs K.

Sobald das Kraftfahrzeug K fahrbereit ist (Zeit t=t3), beginnt sich das Lichterscheinungsbild LE zu verändern. Dies erfolgt in der Weise, dass, ausgehend von der Längsmittenebene LM des Kraftfahrzeugs Kein nichtleuchtender Teil LE3 des Lichterscheinungsbildes LE erzeugt wird. Zu beiden Seiten des nichtleuchtenden Teils LE3 sind leuchtende Teile LE1 bzw. LE2 des Lichterscheinungsbildes LE noch vorhanden. Der nichtleuchtende Teil LE3 breitet sich jedoch stetig bzw. kontinuierlich über die Breite B aus, was mit einer Richtung R der Veränderung des Lichterscheinungsbildes LE beziffert ist. Genau genommen werden zwei Veränderungs-Grenzbereiche G1 und G2 erzeugt, die sich jeweils nach außen zur Außenseite des Kraftfahrzeugs K bewegen. Dies trifft auch noch zu einem Zeitpunkt t=t4 zu.

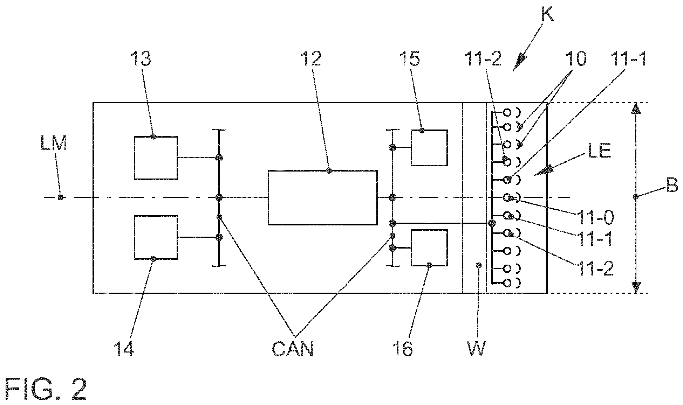

Dabei ist darauf hinzuweisen, dass jeder Veränderungs-Grenzbereich G1, G2 ein solcher Bereich ist, in dem sich ein bestimmter Leuchtbereich 10 (vgl. auch Fig. 2) gerade von einem bestimmten Zustand in einen anderen Zustand verändert.

Der Zustand kann dabei beispielsweise durch die Höhe der Leuchtintensität und/oder durch die Farbe des abgestrahlten Lichts charakterisiert sein. Im Ausführungsbeispiel wird die Leuchtintensität im jeweiligen Grenzbereich von einer maximalen Leuchtintensität auf null reduziert.

Schließlich (zu einem Zeitpunkt t=t5) haben sich die Veränderungs-Grenzbereiche G1, G2 soweit nach außen bewegt, dass das Lichterscheinungsbild LE nur noch durch den nichtleuchtenden Teil LE3 gebildet wird.

Die Fig. 2 zeigt beispielhaft eine technische Ausführung des Kraftfahrzeugs K, damit es zur Durchführung des erfindungsgemäßen Verfahrens geeignet ist. Es sind dabei nur die für das Verständnis der Erfindung wesentlichen Elemente dargestellt.

So sind Leuchtbereiche 10 ersichtlich, welche sich über die Breite B des Kraftfahrzeugs K entlang der Windschutzscheibe W erstrecken. Die Leuchtbereiche 10 sind im vorliegenden Fall als Streuoptiken ausgebildet, welche Leuchtmitteln in Form von lichtemittierenden Dioden (LEDs) optisch nachgeschaltet sind. Die Leuchtmittel sind insbesondere als sogenannte RGB-LEDs ausgebildet, so dass die Leuchtmittel und damit die Leuchtbereiche 10 Licht in verschiedenen, gewünschten Farben abstrahlen können. Von den Leuchtmitteln sind lediglich ein in der Längsmittenebene LM befindliches Leuchtmittel 11-0 und beidseitig davon angeordnete Leuchtmittel 11-1 und 11-2 beziffert.

Eine Steuereinrichtung 12 ist über einen CAN-Bus CAN signaltechnisch mit den Leuchtmitteln und mit Fahrzeugkomponenten 13, 14, 15 und 16 verbunden. Die Fahrzeugkomponenten 13 bis 16 müssen in einwandfreiem Zustand sein, damit eine Fahrbereitschaft des Kraftfahrzeugs K bestätigt werden kann. Die Fahrzeugkomponenten 13 bis 16 können rein beispielhaft durch Bremsen, Motorsteuergerät, Kraftstoffpumpe und/oder eine Traktionsbatterie gebildet sein. Nach Einschalten der Zündung kann die Steuereinrichtung 12 Signale der Fahrzeugkomponenten 13 bis 16 auswerten und daraus auf eine vorliegende Fahrbereitschaft oder auf einen vorliegenden Fehler schließen. In Abhängigkeit davon sind die Leuchtmittel durch die Steuereinrichtung 12 ansteuerbar.

Nach einem Einschalten des Kraftfahrzeugs K durch einen Fahrzeugführer werden sämtliche Leuchtmittel 11-0, 11-1, 11-2 usw. mit maximaler Intensität bestromt. Somit leuchten auch sämtliche Leuchtbereiche 10, wodurch durch die Leuchtbereiche 10 ein Lichterscheinungsbild LE ausgebildet wird, welches sich über die Breite B des Kraftfahrzeugs K oder zumindest über einen Großteil der Breite B erstreckt.

Im vorliegenden Ausführungsbeispiel sei angenommen, dass das Kraftfahrzeug K eine Fahrbereitschaft aufweist und keine nennenswerten Fehler erkannt wurden.

Daher werden die Leuchtmittel anschließend durch die Steuereinrichtung 12 sequentiell nacheinander angesteuert. Die Ansteuerung erfolgt nun in der Weise, dass zunächst das mittlere Leuchtmittel 11-0 ausgeschaltet wird, anschließend die nächst außenliegenden Leuchtmittel 11-1, danach die noch weiter außenliegenden Leuchtmittel 11-2, und so weiter, bis schließlich auch die letzten, in der Figur ganz außen liegenden Leuchtmittel ausgeschaltet werden. Durch das sequentielle Ausschalten der Leuchtmittel wird der nichtleuchtende und sich stetig vergrößernde Teil LE3 ausgebildet (vgl. Fig. 1).

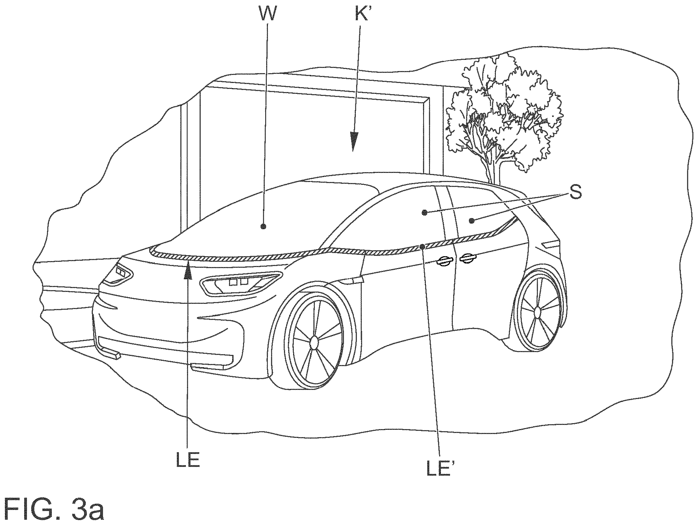

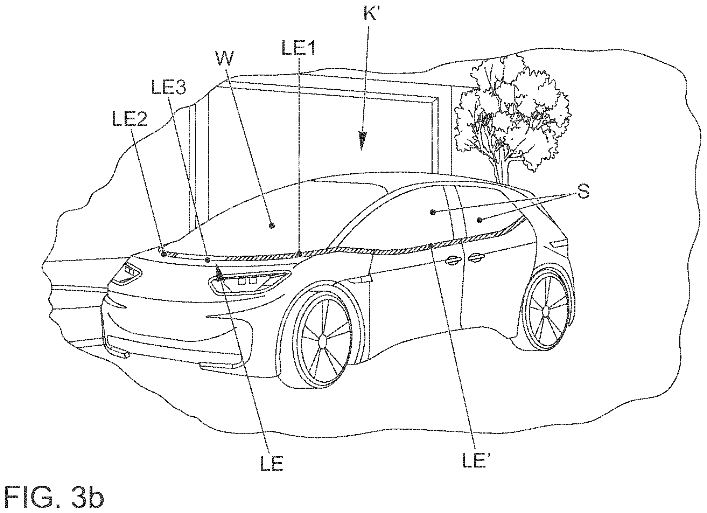

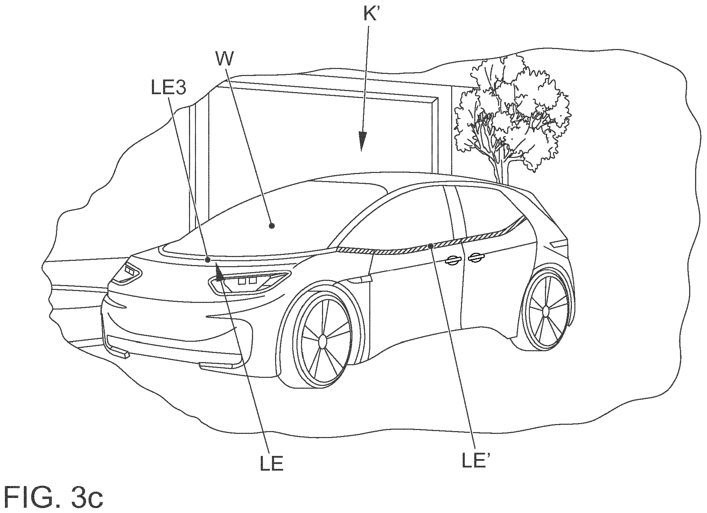

Anhand der Figuren 3 wird nunmehr ein Beispiel eines Kraftfahrzeugs K', bei dem das Lichterscheinungsbild LE linienartig unterhalb der Windschutzscheibe W verläuft.

So befindet sich das Kraftfahrzeug K' im Stillstand und ein Fahrzeugführer (nicht ersichtlich) hat die Zündung eingeschaltet. Dadurch wird ein zunächst das Lichterscheinungsbild LE durch eine leuchtende Linie gebildet. Mit LE' wird ein Lichterscheinungsbild beziffert, welches sich seitlich unterhalb und entlang der Seitenfenster hinzieht (Fig. 3a).

Sobald eine Fahrbereitschaft des Kraftfahrzeugs K' vorliegt (Fig. 3b), bilden sich ein mittiger, nicht leuchtender Teil LE3 und beidseitig davon leuchtende Teil LE1 bzw. LE2 aus.

Der nicht leuchtende Teil LE3 breitet sich stetig weiter aus, so dass kurze Zeit später (Fig. 3c) das Lichterscheinungsbild LE nur noch vom nichtleuchtenden Teil LE3 gebildet ist.

Anstatt des Ein- bzw. Ausschaltens der Leuchtmittel zur Erzeugung der leuchtenden Teile LE1 und LE2 sowie des nicht leuchtenden Teils LE3 kann die Ansteuerung der Leuchtmittel auch derart erfolgen, dass in einer analogen Weise die Teile LE1 und LE2 mit einer ersten Farbe und der Teil LE3 mit einer zweien Farbe erzeugt werden. So ist bspw. denkbar, den Teil LE3 in einer grünen Farbe und die Teile LE1, LE2 in einer roten Farbe leuchten zu lassen.

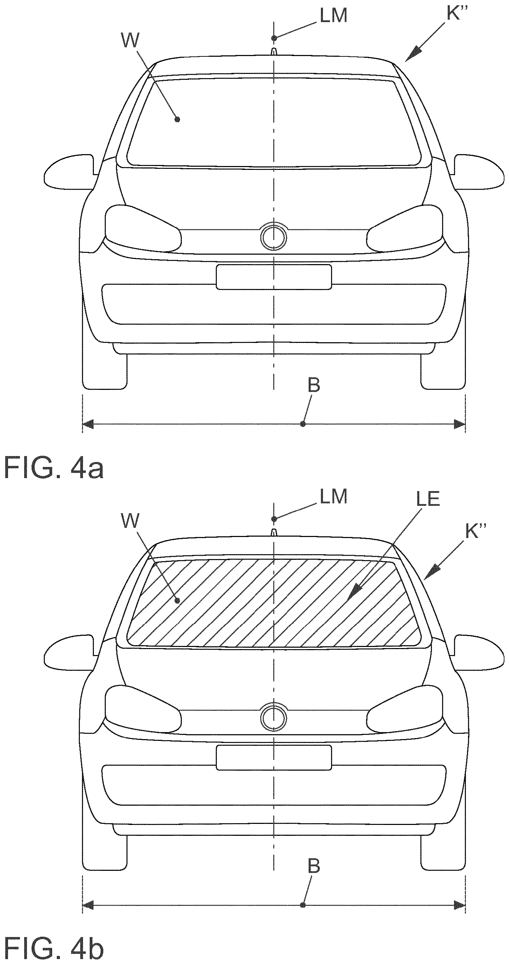

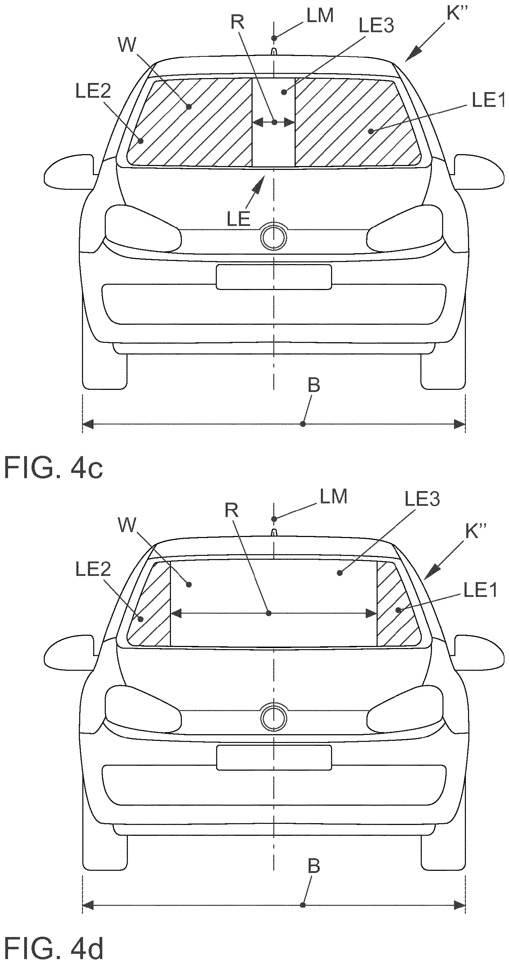

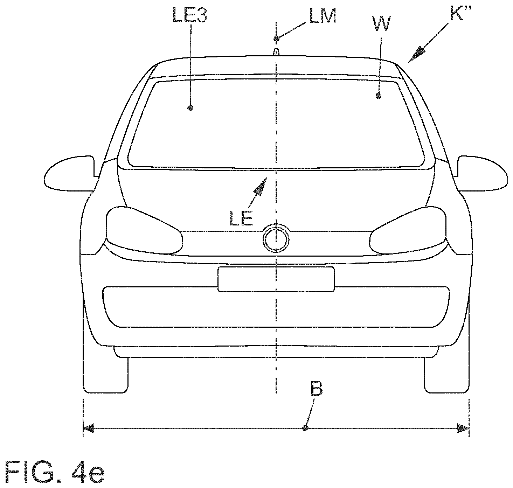

In den Figuren 4 wird ein Ausführungsbeispiel eines Kraftfahrzeugs K" dargestellt, bei dem ein Lichterscheinungsbild LE in der Fläche der Windschutzscheibe W erzeugt und verändert wird.

Dabei wird nach dem Einsteigen des Fahrzeugführers (nicht gezeigt) in das Fahrzeug K" (Fig. 4a) und nach dem Einschalten des Kraftfahrzeugs K" (Fig. 4b) zunächst die komplette Windschutzscheibe W derart erhellt, dass ein Lichterscheinungsbild LE entsteht, welches ausschließlich aus einem beleuchteten Teil besteht, der sich somit nahezu über die gesamte Breite B des Kraftfahrzeugs K" erstreckt.

Bei vorliegender Fahrbereitschaft (ab Fig. 4c) des Kraftfahrzeugs K" wird ein mittlerer, nichtleuchtender Teil LE3 ausgebildet, welcher sich zu beiden Seiten des Kraftfahrzeugs K", also in Richtung der Außenspiegel ausbreitet. Mit R ist wiederum die Richtung der Veränderung des Lichterscheinungsbildes LE beziffert. Beidseitig vom nichtleuchtenden Teil LE3 sind leuchtende Bereiche LE1 bzw. LE2 ausgebildet.

Kurze Zeit später (Fig. 4d) ist der "Lichtvorhang" bereits soweit aufgezogen, dass der nichtleuchtende Teil LE3 vom Lichterscheinungsbild LE bereits deutlich größer ist als die Summe der leuchtenden Teile LE1 und LE2.

Schließlich ist der "Lichtvorhang" gänzlich aufgezogen und das Lichterscheinungsbild LE wird ausschließlich durch den nichtleuchtenden Teil LE3 gebildet ist (Fig. 4e). Dem Fahrzeugführer wird somit sehr deutlich die vorliegende Fahrbereitschaft und "freie Fahrt" signalisiert.

### Bezugszeichenliste

- 10: Leuchtbereiche
- 11: Leuchtmittel; LEDs
- 11-0: Leuchtmittel; LEDs
- 11-1: Leuchtmittel; LEDs
- 11-2: Leuchtmittel; LEDs
- 11-3: Leuchtmittel; LEDs
- 12: Steuereinrichtung
- 13-16: Fahrzeugkomponenten

- B: Breite des Kraftfahrzeugs
- CAN: CAN-Bus
- F: Fahrzeugführer
- G1, G2: Veränderungs-Grenzbereiche
- K, K', K": Kraftfahrzeug
- LE, LE': Lichterscheinungsbild
- LE1: Teil des Lichterscheinungsbildes
- LE2: Teil des Lichterscheinungsbildes
- LE3: Teil des Lichterscheinungsbildes
- LM: Längsmittenebene
- R: Richtung der Veränderung
- S: Seitenscheiben
- t: Zeit
- t1-t5: Zeitpunkte
- W: Windschutzscheibe

## Patentansprüche

1. Verfahren zum Betreiben einer Beleuchtung eines Kraftfahrzeugs (K, K', K"), wobei der Betrieb derart erfolgt, dass ein Lichterscheinungsbild (LE) erzeugt wird, welches sich über zumindest einen Großteil einer Breite (B) des Kraftfahrzeugs (K, K', K") erstreckt, **wobei** das Lichterscheinungsbild (LE) bei einem Einschalten des Kraftfahrzeugs (K, K', K") zumindest für einen Fahrzeugführer (F) sichtbar erscheint und anschließend zur Anzeige einer Fahrbereitschaft des Kraftfahrzeugs (K, K', K") verändert wird, wobei die Veränderung des Lichterscheinungsbildes (LE) ebenfalls über zumindest einen Großteil der Breite (B) des Kraftfahrzeugs (K, K', K") durchgeführt wird, **dadurch gekennzeichnet, dass** die Veränderung des Lichterscheinungsbildes (LE) von einer Längsmittenebene (LM) des Kraftfahrzeugs (K, K', K") ausgeht und sich in zwei entgegengesetzten Richtungen (R) fortsetzt, wobei ausgehend von der Längsmittenebene (LM) ein Teil (LE3) des Lichterscheinungsbildes (LE) mit zwei Veränderungs-Grenzbereichen (G1, G2) erzeugt wird, wobei sich die Grenzbereiche (G1, G2) jeweils nach außen zur Außenseite des Kraftfahrzeugs (K) bewegen und sich dadurch der besagte Teil (LE3) des Lichterscheinungsbildes (LE) kontinuierlich über die Breite (B) des Kraftfahrzeugs ((K, K', K") ausbreitet, wobei eine Vielzahl von Leuchtbereichen (10) sequentiell nacheinander derart verändert wird, dass in Bezug auf das Kraftfahrzeug (K, K', K") das sich kontinuierlich verändernde Lichterscheinungsbild (LE) erzeugt wird und die sequentielle Veränderung der Leuchtbereiche (10) durch eine Reduzierung der Lichtintensität der Leuchtbereiche (10) oder durch einen Wechsel von einer bestimmen Farbe in eine andere bestimmte Farbe der Leuchtbereiche (10) bewirkt wird, und wenigstens Leuchtbereiche (10) innerhalb einer Fläche einer Windschutzscheibe (W) des Kraftfahrzeuges (K") sequentiell verändert werden .

2. Verfahren nach Anspruch 1, **dadurch gekennzeichnet, dass** die sequentielle Veränderung der Leuchtbereiche (10) durch ein Ausschalten der Leuchtbereiche (10) bewirkt wird.

3. Verfahren nach Anspruch 1 oder 2, **dadurch gekennzeichnet, dass** entlang der Fensterlinie der Windschutzscheibe (W) vorhandene Leuchtbereiche (10) sequentiell verändert werden.

4. Kraftfahrzeug (K, K', K") zur Durchführung des Verfahrens nach einem der vorhergehenden Ansprüche, mit einer Vielzahl von Leuchtbereichen (10) entlang zumindest eines Großteils einer Breite (B) des Kraftfahrzeugs (K, K', K"), durch die in Bezug auf das Kraftfahrzeug (K, K', K") ein sich zumindest über einen Großteil der Breite (B) des Kraftfahrzeugs (K, K', K") erstreckendes und für einen Fahrzeugführer (F) sichtbares Lichterscheinungsbild (LE) erzeugt wird, **mit** wenigstens einer Steuereinrichtung (12) zur Ansteuerung von Leuchtmitteln (11) zur Veränderung der Leuchtbereiche (10), wobei bei einem Einschalten des Kraftfahrzeugs (K, K', K") die Leuchtmittel (11) derart angesteuert werden, dass das Lichterscheinungsbild (LE) erscheint und anschließend eine Fahrbereitschaft des Kraftfahrzeugs (K, K', K") dadurch angezeigt wird, dass die Leuchtmittel (11) durch die Steuereinrichtung (12) derart angesteuert werden, dass sich das Lichterscheinungsbild (LE) in Bezug auf das Kraftfahrzeug (K, K', K") verändert, wobei die Veränderung des Lichterscheinungsbildes (LE) ebenfalls über zumindest einen Großteil der Breite (B) des Kraftfahrzeugs (K, K', K") durchgeführt wird, **dadurch gekennzeichnet, dass** die Ansteuerung der Leuchtmittel (11) derart durchgeführt wird, dass die Leuchtmittel (11) sequentiell ausgeschaltet oder die von den Leuchtmitteln (11) erzeugten Farben verändert werden und die Veränderung des Lichterscheinungsbildes (LE) von einer Längsmittenebene (LM) des Kraftfahrzeugs (K, K', K") ausgeht und sich in zwei entgegengesetzten Richtungen (R) fortsetzt, und das Lichterscheinungsbild (LE) in der Fläche einer Windschutzscheibe (40) erzeugt und verändert wird.

## Claims

1. Method for operating an illumination of a motor vehicle (K, K', K"), wherein the operation takes place in such a way that a light manifestation (LE) is generated which extends over at least a majority of a width (B) of the motor vehicle (K, K', K"), **wherein** the light manifestation (LE) appears visible at least to a driver (F) of the vehicle when the motor vehicle (K, K', K") is switched on and is subsequently altered to indicate that the motor vehicle (K, K', K") is ready to be driven, wherein the alteration in the light manifestation (LE) is likewise performed over at least a majority of the width (B) of the motor vehicle (K, K', K"), **characterized in that** the alteration of the light manifestation (LE) emanates from a longitudinal center plane (LM) of the motor vehicle (K, K', K") and proceeds in two opposite directions (R), wherein, starting from the longitudinal center plane (LM), a portion (LE3) of the light manifestation (LE) is generated with two alteration boundary regions (G1, G2), wherein the boundary regions (G1, G2) each move outward toward the outside of the motor vehicle (K), and said portion (LE3) of the light manifestation (LE) thereby propagates continuously over the width (B) of the motor vehicle (K, K', K"), wherein a plurality of lighting regions (10) are altered sequentially, one after another, in such a way that the continuously altering light manifestation (LE) is generated in relation to the motor vehicle (K, K', K"), and the sequential alteration of the lighting regions (10) is brought about by a reduction in the light intensity of the lighting regions (10) or by changing from one defined color of the lighting regions (10) into another defined color of said lighting regions, and at least lighting regions (10) within an area of a windshield (W) of the motor vehicle (K") are sequentially altered.

2. Method according to claim 1, **characterized in that** the sequential alteration of the lighting regions (10) is brought about by switching off the lighting regions (10).

3. Method according to claim 1 or 2, **characterized in that** lighting regions (10) present along the window line of the windshield (W) are altered sequentially.

4. Motor vehicle (K, K', K") for performing the method according to any one of the preceding claims, having a plurality of lighting regions (10) along at least a majority of a width (B) of the motor vehicle (K, K', K"), via which, in relation to the motor vehicle (K, K', K"), a light manifestation (LE) which extends at least over a majority of the width (B) of the motor vehicle (K, K', K") and is visible to a driver (F) of the vehicle is generated, and having at least one control device (12) for controlling illuminants (11) for altering the lighting regions (10), wherein, when the motor vehicle (K, K', K") is switched on, the illuminants (11) are controlled in such a way that the light manifestation (LE) appears, and subsequently it is indicated that the motor vehicle (K, K', K") is ready to be driven in that the illuminants (11) are controlled by the control device (12) in such a way that the light manifestation (LE) is altered in relation to the motor vehicle (K, K', K"), wherein the alteration of the light manifestation (LE) is likewise performed over at least a majority of the width (B) of the motor vehicle (K, K', K"), **characterized in that** the controlling of the illuminants (11) is performed in such a way that the illuminants (11) are switched off sequentially, or the colors generated by the illuminants (11) are altered, and the alteration of the light manifestation (LE) emanates from a longitudinal center plane (LM) of the motor vehicle (K, K', K") and proceeds in two opposite directions (R), and the light manifestation (LE) is generated and altered in the area of a windshield (40).

## Revendications

1. Procédé permettant de faire fonctionner un éclairage d'un véhicule automobile (K, K', K"), le fonctionnement étant effectué de telle sorte qu'une image d'apparition de lumière (LE) s'étendant sur au moins une grande partie d'une largeur (B) du véhicule automobile (K, K', K") est produite, l'image d'apparition de lumière (LE) apparaissant de manière à être visible au moins pour un conducteur (F) lorsque le véhicule automobile (K, K', K") est mis en marche et étant ensuite modifiée pour afficher un état de marche du véhicule automobile (K, K', K"), la modification de l'image d'apparition de lumière (LE) étant également réalisée sur au moins une grande partie de la largeur (B) du véhicule automobile (K, K', K"),
**caractérisé en ce que** la modification de l'image d'apparition de lumière (LE) part d'un plan médian longitudinal (LM) du véhicule automobile (K, K', K") et se poursuit dans deux directions (R) opposées, une partie (LE3) de l'image d'apparition de lumière (LE) comportant deux zones limites (G1, G2) de modification étant produite à partir du plan médian longitudinal (LM), les zones limites (G1, G2) se déplaçant respectivement vers l'extérieur vers le côté extérieur du véhicule automobile (K) et ainsi ladite partie (LE3) de l'image d'apparition de lumière (LE) se propageant en continu sur la largeur (B) du véhicule automobile (K, K', K"), une pluralité de zones d'éclairage (10) étant modifiées de manière séquentielle les unes après les autres de telle sorte que, par rapport au véhicule automobile (K, K', K"), l'image d'apparition de lumière (LE) modifiée en continu est produite et la modification de manière séquentielle des zones d'éclairage (10) est provoquée par une réduction de l'intensité lumineuse des zones d'éclairage (10) ou par un passage d'une couleur déterminée à une autre couleur déterminée des zones d'éclairage (10), et au moins des zones d'éclairage (10) à l'intérieur d'une surface d'un pare-brise (W) du véhicule automobile (K") étant modifiées de manière séquentielle.

2. Procédé selon la revendication 1, **caractérisé en ce que** la modification de manière séquentielle des zones d'éclairage (10) est provoquée par une désactivation des zones d'éclairage (10).

3. Procédé selon la revendication 1 ou 2, **caractérisé en ce que** des zones d'éclairage (10) présentes le long de la ligne de fenêtre du pare-brise (W) sont modifiées de manière séquentielle.

4. Véhicule automobile (K, K', K") permettant la réalisation du procédé selon l'une des revendications précédentes, comportant une pluralité de zones d'éclairage (10) le long d'au moins une grande partie d'une largeur (B) du véhicule automobile (K, K', K"), par l'intermédiaire desquelles une image d'apparition de lumière (LE) s'étendant au moins sur une grande partie de la largeur (B) du véhicule automobile (K, K', K") et visible pour un conducteur (F) est produite par rapport au véhicule automobile (K, K', K"), comportant au moins un dispositif de commande (12) permettant de commander des moyens d'éclairage (11) pour la modification des zones d'éclairage (10), lorsque le véhicule automobile (K, K', K") est mis en marche, les moyens d'éclairage (11) étant commandés de telle sorte que l'image d'apparition de lumière (LE) apparaît et un état de marche du véhicule automobile (K, K', K") est ensuite affiché par le fait que les moyens d'éclairage (11) sont commandés par le dispositif de commande (12) de telle sorte que l'image d'apparition de lumière (LE) est modifiée par rapport au véhicule automobile (K, K', K"), la modification de l'image d'apparition de lumière (LE) étant également réalisée sur au moins une grande partie de la largeur (B) du véhicule automobile (K, K', K"), **caractérisé en ce que** la commande des moyens d'éclairage (11) est réalisée de telle sorte que les moyens d'éclairage (11) sont désactivés de manière séquentielle ou les couleurs produites par les moyens d'éclairage (11) sont modifiées et la modification de l'image d'apparition de lumière (LE) part d'un plan médian longitudinal (LM) du véhicule automobile (K, K', K") et se prolonge dans deux directions (R) opposées, et l'image d'apparition de lumière (LE) est produite et modifiée dans la surface d'un pare-brise (40).
